# EUROPÄISCHE PATENTSCHRIFT

(11) **EP 2 538 116 B1**
(45) Veröffentlichungstag und Bekanntmachung des Hinweises auf die Patenterteilung: **05.03.2014**
(21) Anmeldenummer: 11173665.8
(22) Anmeldetag: 12.07.2011
(51) Int. Cl.: F16H 35/00, F16H 37/12, F16K 31/04, H02K 7/116

(54) **Stellantrieb**
Actuator
Mécanisme de commande

(30) Priorität: 22.06.2011 EP 11171098
(43) Veröffentlichungstag der Anmeldung: 26.12.2012
(73) Patentinhaber: Siemens Aktiengesellschaft, 80333 München (DE)
(72) Erfinder: Bretz, Markus, 8702 Zollikon (CH); Evertz, Jörg, 8903 Birmensdorf (CH); Hindermann, Jörg, 8805 Richterswil (CH); Pally, Andreas, 6319 Allenwinden (CH); Sprecher, Martin, 6331 Hünenberg (CH)

(56) Entgegenhaltungen:
- EP-A2- 1 647 698
- DE-A1- 1 750 606
- DE-A1- 19 838 146
- JP-A- 11 213 824

## Beschreibung

Die Erfindung betrifft einen Stellantrieb gemäss dem Oberbegriff des Anspruches 1.

Solche Stellantriebe sind zumindest mit einem Motor, einem Getriebe und einem Stellanschluss ausgestattet.

Diese Stellantriebe werden zum Beispiel an Ventilen oder Klappen in Anlagen für die Heizung, Lüftung und Kühlung von Gebäuden eingesetzt. Für dieses und ähnliche Zwecke müssen die Stellantriebe zuverlässig, beständig und preiswert, insbesondere ohne teuere Komponenten, in grossen Volumen herstellbar sein. Mit der wachsenden Bedeutung von drahtloser Ansteuerung ist, mangels externer Stromversorgung, auch ein energiearmer Betrieb gefragt. Deswegen und um Motor und Antriebsstrang zu schonen müssen solche Stellantriebe beim Erreichen einer Endstellung oder einer sonstigen anzusteuernden Stellung rasch, zuverlässig, leistungsarm und geschmeidig abgeschaltet oder gedrosselt werden. Dasselbe gilt bei unerwartet grossen Lasterschwerungen auf dem Weg dazu, wie wegen Verschleisses vom zu stellenden Gegenstand oder wegen eines Fremdkörpers darin. Bei geeigneten Elektromotoren, zum Beispiel Synchronmotoren oder aber bürstenlosen Gleichspannungsmotoren, führt das Erreichen ihres Überlastmoments zur Beschädigung und Verringerung ihrer Lebensdauer, insbesondere wenn die Abschaltung nicht rasch erfolgt.

Deswegen ist das Getriebe mit zumindest zwei gegenseitig bewegbaren Getriebeteilen ausgestattet, sowie einer auf zwei dieser einwirkenden Feder die deren Bewegung aus einem Ruhestand hinaus entgegenwirkt. Üblich sind Biegefedern oder Torsionsfedern. Insbesondere bei linearer Bewegung eignen sich Spiralfedern gut. Das Getriebe ist so konstruiert, dass bei gesperrtem Stellanschluss der Motor in Betrieb die Getriebeteile aus dem Ruhestand hinaus zu einem Schaltpunkt hin bewegt. Dort wird je nach Anwendung der Motor abgeschaltet, oder aber in der Gegenrichtung gefahren, oder aber im Falle eines unidirektionalen Motors gedrosselt um die Stellung gegen die Einwirkung einer Rückstellfeder beizubehalten.

Bei manchen solchen Stellantrieben führt nach Abschalten des Motors die Federwirkung unter Umständen dazu, dass die Getriebeteile sich zurückbewegen und der Motor wieder eingeschaltet wird. Ähnliches kann beim Drosseln der Motorleistung passieren. Wenn der Stellantrieb so ins stottern gerät, können die dabei entstehenden Vibrationen den Motor Schaden zufügen, obwohl sein Überlastmoment vermieden wird. Eine Elektronik um dieses Problem mit Sicherheit zu vermeiden benötigt Komponenten die für die typischen Anwendungen zu teuer sind.

Andere solchen Stellantriebe werden unter der Marke Siemens mit Typenandeutung SQS oder SQX vertrieben. Sie beruhen auf dem Prinzip des Planetengetriebes. Ein Teil des Getriebestranges ist in einem separaten, schwenkbaren Gehäuse gelagert. Dieses wird mittels einer Torsionsfeder in einer definierten Mittellage gehalten. Beim Erreichen einer Endstellung wird der Stellanschluss blockiert und das schwenkbare Gehäuse trotz Torsion der Torsionsfeder aus der Mittellage ausgeschwenkt. Ein am schwenkbaren Gehäuse ausgebildeter Schaltnocken trifft dann auf einen Schaltkontakt, was die Stromzufuhr zum Elektromotor unterbricht und so den Antrieb abstellt. Dasselbe passiert wenn aus sonstigem Grund ein gewisses Drehmoment überschritten wird. Der Elektromotor ist so gewählt worden, dass unter üblichen Umständen, mit Berücksichtigung von Fertigungstoleranzen, die Torsionsfeder ihn ausser Betrieb nicht entsperren kann. Somit kehrt normalerweise das schwenkbare Gehäuse nicht sofort in der Mittellage zurück, was den Elektromotor wieder einschalten und so den Stellantrieb ins stottern bringen würde. Erst nach einem neuen Fahrbefehl in Gegenrichtung bewegt sich das schwenkbare Gehäuse wieder in seine Mittellage.

Weiter solche bekannten Stellantriebe haben einen ähnlichen Aufbau, wobei anstelle einer Torsionsfeder eine Biegefeder einen schwenkbaren Getriebeteil in einer Mittellage zu halten versucht. Die Biegefeder ist mittig montiert und greift in einer Aussparung am vorderen Ende des schwenkbaren Gehäuses ein.

Der Erfindung liegt die Einsicht zugrunde, dass man solche Stellantriebe mit einfachen mechanischen Mitteln wesentlich verbessern und verbilligen kann.

Die erfindungsgemäße Lösung wird durch die Merkmale des Anspruches 1 dargestellt.

Demgemäß ist das Getriebe so konstruiert, dass es bei der Bewegung aus dem Ruhestand hinaus deren Entgegenwirkung ab einem gewissen Punkt vor dem Schaltpunkt reduziert, bevorzugt an einem gewissen zweiten Punkt vor dem Schaltpunkt auf unter 60% ihres maximalen Wertes, optional sogar an einem gewissen dritten Punkt vor dem Schaltpunkt auf Null. Die Entgegenwirkung gegen die Bewegung entspricht in Fall einer axialen Schiebung einer effektiven Kraft, zum Beispiel in einem Schneckengetriebe, oder aber im Falle einer Rotation einem Drehmoment. Nach einem federtypischen Anstieg am Anfang ist erfindungsgemäss die Entgegenwirkung über einer Strecke gegenüber vorherigen Höchstwerten reduziert, nimmt zum Beispiel mit jeder weiteren Bewegung tendenziell ab. Dank einfacher Massnahmen kann in etwa bei einer Reduktion auf 60% ein kleinerer und disproportional billiger Motor die Aufgaben zuverlässig erledigen.

In einer bevorzugten erfindungsgemässen Ausführung ist die Feder eine Biegefeder, deren Entgegenwirkung beim Biegen mit einfachen mechanischen Mitteln beeinflusst werden kann, zum Beispiel durch Verschieben des Angriffspunkts entlang ihrer Länge oder durch Zusammenwirken mit einer Kurvenscheibe.

Die Reduktion der Entgegenwirkung erfolgt beispielsweise durch eine kompensierende Einwirkung in der Bewegungsrichtung durch einen separaten Haltemechanismus, insbesondere durch einen Einrastnocken auf dem ersten Getriebeteil und ein Einrastelement auf dem zweiten. Dabei ist das Einrastelement so ausgelegt, dass sein Griff auf dem Einrastnocken bloss durch Feder und Motor gemeinsam gelöst werden kann. Somit wird der Einrastnocken erst mit der Betätigung des Motors in Gegenrichtung aus ihm befreit und der Stellantrieb kann nicht ins stottern geraten.

In einer bevorzugten erfindungsgemässen Ausführung jedoch ist das erste Getriebeteil zumindest mit einer Kurvenscheibe ausgestattet, ist das zweite Getriebeteil zumindest mit einem Abtastelement für die Kurvenscheibe ausgestattet, und wirkt die Feder bei der Bewegung aus dem Ruhestand hinaus entsprechend der Position auf der Kurvenscheibe des Abtastelements auf die Getriebeteile ein. Bevorzugt wirkt die Feder mittels Abtastelements und Kurvenscheibe auf die Getriebeteile ein, und enthält die Kurvenscheibe zumindest eine Rampe, auf welchem eine maximale Entgegenwirkung durch die Feder resultiert. Vorteilhaft enthält die Kurvenscheibe zumindest eine der Rampe naheliegende federneutrale Strecke, auf welcher keine Entgegenwirkung durch die Feder resultiert. Das Abtastelement ist zum Beispiel am Ende einer Biegefeder befestigt, oder ist dort sogar integraler Bestandteil, entstanden insbesondere durch Krümmung der Biegefeder.

In einer weiteren bevorzugten erfindungsgemässen Ausführung ist das Getriebe mit einem Vorspannungselement ausgestattet, das geeignet ist um die Entgegenwirkung durch die Feder einzustellen. Insbesondere bei einer Biegefeder lässt sich dies einfach verwirklichen. Bevorzugt ist das Vorspannungselement geeignet, die Entgegenwirkung durch die Feder bei unterschiedener Richtung der Bewegung aus dem Ruhestand hinaus unterschieden einzustellen.

In einer weiteren bevorzugten erfindungsgemässen Ausführung ist das Getriebe so konstruiert, dass es bei der Bewegung aus dem Ruhestand hinaus am Schaltpunkt den Motor abschaltet. Beispielsweise sind die Getriebeteile dazu zumindest mit einem Schalter, respektive einem Schaltnocken ausgestattet.

In einer weiteren bevorzugten erfindungsgemässen Ausführung ist einer der beiden Getriebeteile mit einem Zahnrad ausgestattet, das mit zumindest einem Lösenocken ausgestattet ist, ist der andere Getriebeteil mit zumindest einem Lösekörper ausgestattet, und berühren bei deren Bewegung aus dem Ruhestand hinaus in der Nähe eines Schaltpunkts Lösenocken und Lösekörper einander. Bevorzugt sind Lösenocken und Lösekörper so gestaltet, dass bei unterschiedlicher Drehrichtung des Zahnrads ein Lösenocken auf eine abgeschrägte, beziehungsweise auf eine quer stehende Berührungsfläche des Lösekörpers trifft. Dazu weist beispielsweise der Lösekörper asymmetrisch eine quer stehende Berührungsfläche für den Lösenocken aus einer Drehrichtung und eine schräge Berührungsfläche für ihn aus der anderen Drehrichtung auf.

In einer weiteren bevorzugten erfindungsgemässen Ausführung ist das Getriebe mit zumindest einem Handversteller ausgestattet, und ist das Getriebe so konstruiert, dass es bei einer Betätigung des Handverstellers den Motor abschaltet, zwei auf einander einwirkenden Zahnräder der ersten und zweiten Getriebeteile ausrückt und die Getriebeteile gegebenenfalls in den Ruhestand hinein zwingt.

Nachfolgend wird ein Ausführungsbeispiel der Erfindung anhand der Figuren beschrieben. Es zeigen:
Figur 1 schematisch einen schwenkbaren Getriebeteil vom erfindungsgemässen Stellantrieb, Figur 2 schematisch den schwenkbaren Getriebeteil nach Figur 1, sowie daran ausgangsseitig angeschlossene Zahnradelemente und eine Biegefeder,
Figur 3 schematisch den schwenkbaren Getriebeteil nach Figur 1, sowie die daran ausgangsseitig angeschlossenen Zahnradelemente, die Biegefeder, das Vorspannungselement, die Schalter und einen Elektromotor,
Figur 4 schematisch den schwenkbaren Getriebeteil nach Figur 1, sowie die daran ausgangsseitig angeschlossenen Zahnradelemente, die Biegefeder, das Vorspannungselement, den Elektromotor, einen unteren Gehäuseteil mit dem Stellanschluss, die Schalter und eine Leiterplatte im Wesentlichen ohne ihrer Bestückung,

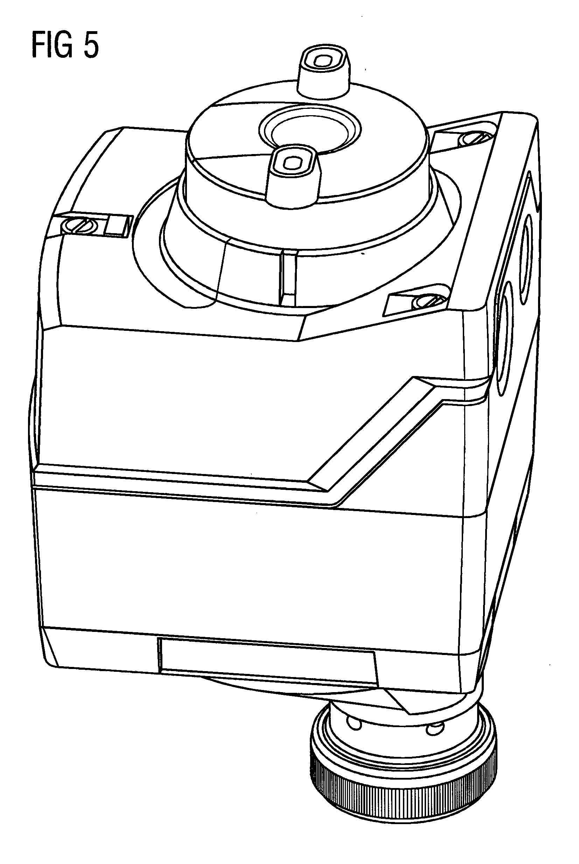

Figur 5 schematisch den erfindungsgemässen Stellantrieb,
Figur 6 einen Durchschnitt des schwenkbaren Getriebeteils nach Figur 1, sowie des daran eingangsseitig angeschlossenen Elektromotors und der daran ausgangsseitig angeschlossenen Zahnradelemente,
Figuren 7, 8 und 9 Skizzen einer Kurvenscheibe des schwenkbaren Getriebeteils nach Figur 1, der Biegefeder, zweier Nocken des Vorspannungselements und zweier Nocken des zweiten Getriebeteils,
Figur 10 schematisch den schwenkbaren Getriebeteil nach Figur 1, sowie daran ausgangsseitig angeschlossene Zahnradelemente,
Figuren 11 und 12 Skizzen eines Teils des schwenkbaren Getriebeteils nach Figur 1, sowie daran ausgangsseitig angeschlossene Zahnradelemente.

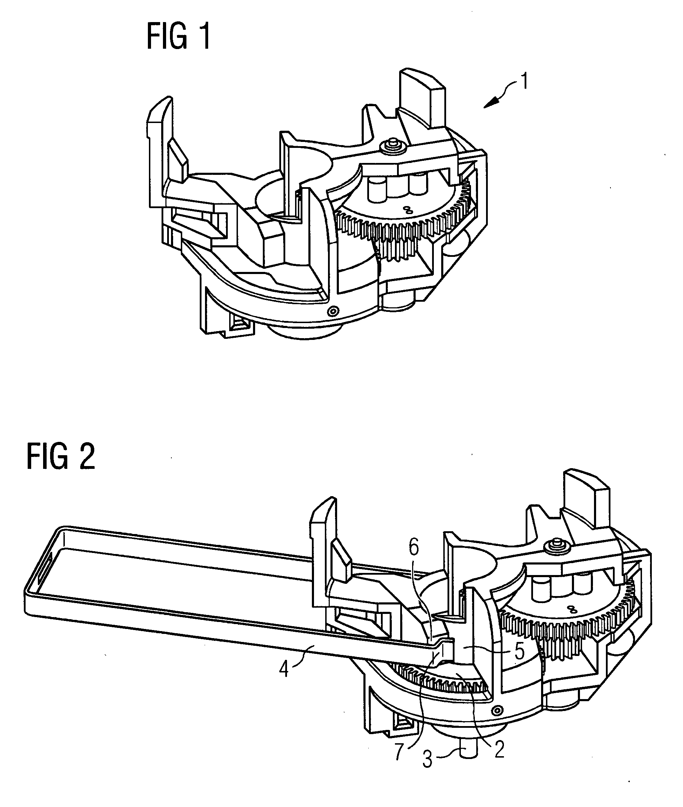

Figur 1 zeigt einen ersten, schwenkbaren Getriebeteil 1.

In Figur 2 sind ein Zahnrad 2 und seine Drehachse 3 innerhalb vom schwenkbaren Getriebeteil angeordnet, die zu einem zweiten Getriebeteil gehören. Das schwenkbare Getriebeteil schwenkt um der Achse mit der die Drehachse 3 fluchtet. Eine im zweiten Getriebeteil befestigte U-förmige Biegefeder 4 hält den schwenkbaren Getriebeteil in einer Mittellage. Dazu ist am schwenkbaren Getriebeteil eine Kurvenscheibe 5 mit einer Rampe 6 vorgesehen, sowie ein Abtastelement 7 an der Biegefeder 4, mittels welcher die Biegefeder 4 auf die Getriebeteile einwirkt. An der Überseite wirkt eine spiegelsymmetrische Anordnung der Drehung des schwenkbaren Getriebeteils in der gegenübergesetzten Richtung entgegen. Im Übrigen besteht die Kurvenscheibe 5 aus konzentrischen Zylindermantelflächen auf zwei Radien zur Schwenkachse des Getriebeteils, welche federneutral sind, im Sinne dass die Biegefeder 4 dort kein Drehmoment auf das schwenkbare Getriebeteil ausübt.

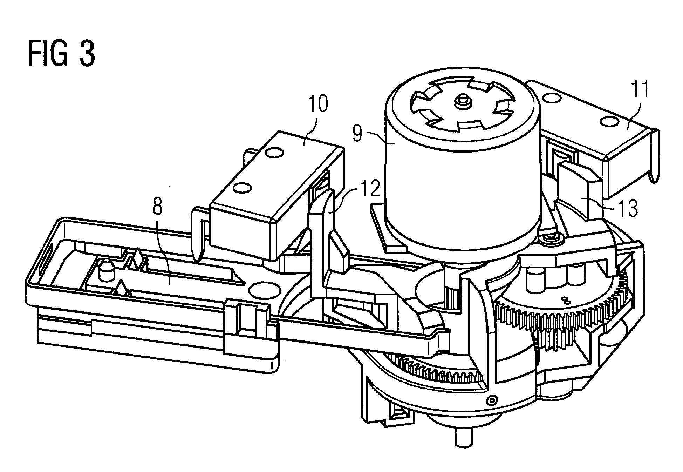

In Figur 3 ist ein Vorspannungselement 8 aufaddiert worden, sowie ein Elektromotor 9 und Schalter 10, 11. Auch diese gehören zum zweiten Getriebeteil. Das Vorspannungselement 8 kann zwecks Einstellung der Federkraft entlang der Symmetrieachse der Biegefeder 4 verschoben und mit einem Rastersystem in mehreren Positionen eingerastet werden. Diese Einstellmöglichkeit könnte auch stufenlos ausgeführt werden. Das Vorspannungselement 8 ermöglicht eine Trimmoperation in der Endmontage, damit Schwankungen in der Federkraft, bedingt durch Toleranzschwankungen, eliminiert werden können. Dadurch kann das Toleranzband des Schaltmoments reduziert werden. Sobald und solange ein Schalter 10, 11 durch seinen respektive Schaltnocken 12, 13 des schwenkbaren Getriebeteils betätigt wird, schaltet der Elektromotor 9 ab.

Die Berührungsfläche jedes Schaltnockens 12, 13 enthält eine Rampe zwecks Betätigung der Taster von den Schaltern 10, 11. Diese Betätigung vergrössert kurz vor und nach dem Erreichen des Schaltpunktes geringfügig die Entgegenwirkung der Bewegung des schwenkbaren Getriebeteils, wenn man sie mit der Entgegenwirkung bloss durch die Biegefeder 4 vergleicht. Nach dem Schaltpunkt üben die Tasterfedern der Schalter 10, 11 kein Drehmoment auf das schwenkbare Getriebeteil mehr aus, weil die Schaltnocken 12, 13 anschliessend an ihrer jeweiligen Rampe mit konzentrischen Zylindermantelflächen federneutral gestaltet sind.

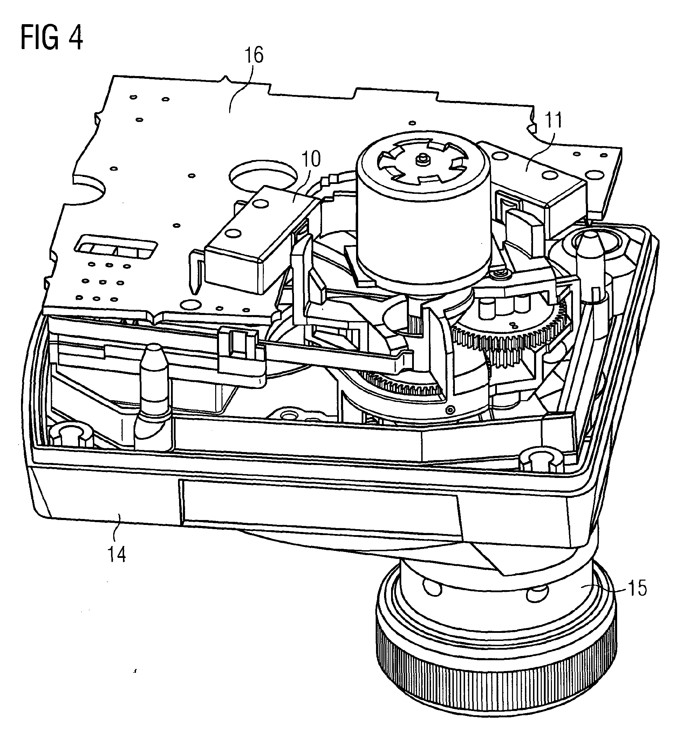

Figur 4 zeigt im Wesentlichen den zweiten Getriebeteil 14, welcher durch das untere Teil des Stellantriebgehäuses gebildet ist. Auch ist ein Stellanschluss 15 dargestellt, um den Stellantrieb an einem geeigneten Ventil anzuschrauben und in Betrieb über einem komplementären Anschlussteil seine Ventilspindel zu bewegen. Eine Leiterplatte 16 trägt unter anderen die Schalter 10, 11. Ihre meisten elektrischen Komponenten sind hier nicht dargestellt.

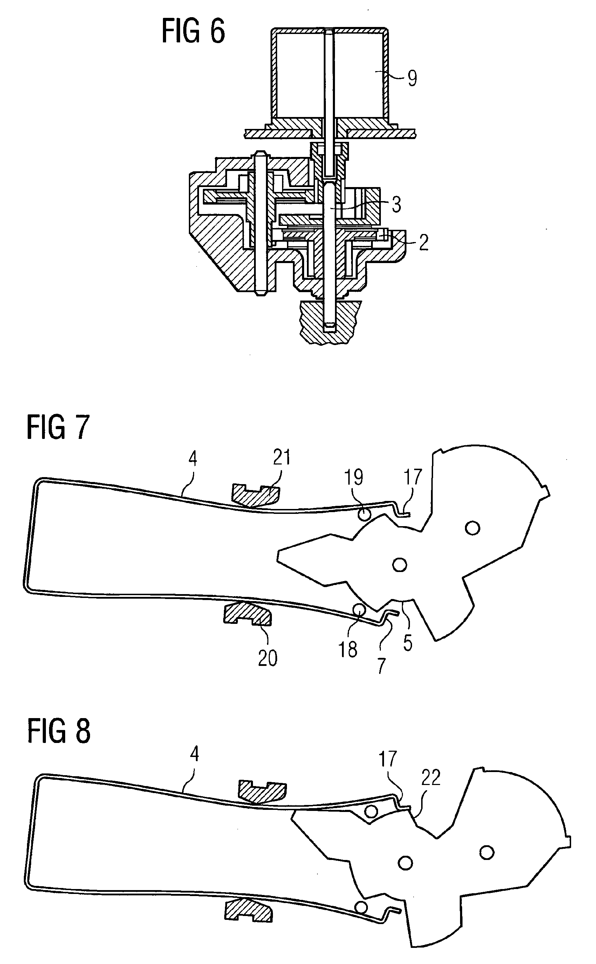

Figur 6 zeigt den ersten, schwenkbarer Getriebeteil, sowie den Elektromotor 9, den Zahnrad 2 und die Drehachse 3 des zweiten Getriebeteils. Das schwenkbare Getriebeteil schwenkt um der Achse mit der die Drehachse 3 fluchtet.

In Figur 7 ist die Kurvenscheibe 5 des schwenkbaren Getriebeteils in einer Mittellage. Dementsprechend greift die Biegefeder 4 nicht ins geschehen ein und sind ihre Abtastelemente 7, 17 durch zwei Spreiznocken 18, 19 des zweiten Getriebeteils sogar davon abgehalten, die Kurvenscheibe 5 zu berühren. Die Spreiznocken 18, 19 sind vor allem eine Montagehilfe für die Biegefeder 4, welche sich sonst durch ihre Vorspannung vor Einbau des schwenkbaren Getriebeteils ganz zusammenbeugen würde. Das Vorspannungselement enthält zwei Vorspannnocken 20, 21, welche die wirksame Biegelänge bestimmen. Je nach ihren Anlegepunkt auf die Biegefeder 4 beeinflussen die Vorspannnocken 20, 21 ihre Einwirkung auf den schwenkbaren Getriebeteil. Somit ist das Vorspannungselement geeignet um das Entgegenwirken gegen seine Bewegung aus der Mittellage einzustellen. In der Alternative können eigene Vorspannungselemente für jeden der Vorspannnocken 20, 21 vorhanden sein. Die Vorspannnocken 20, 21 sind so unabhängig von einander verschiebbar. Damit lässt sich die wirksame Biegelänge der beiden Federschenkel, und damit das Schaltmoment, drehrichtungsabhängig einstellen.

Figur 8 zeigt wie nach einer Drehung des schwenkbaren Getriebeteils das Abtastelement 17 nun oben von der Rampe 22 bei einer federneutralen, weil konzentrischen, Strecke angekommen ist. Damit ist ein gewisses Drehmoment auf das schwenkbare Getriebeteil durch die Biegefeder 4 mittels Abtastelement 17 und Rampe 22 beendet worden. In dieser Lage betätigt einer der Schaltnocken seinen Schalter, was zum Abschalten des Elektromotors führt. Trotz seinem geringen Drehwiderstand verhindert der abgeschaltete Elektromotor normalerweise jede Bewegung. Sollte das schwenkbare Getriebeteil trotzdem noch weiter ausdrehen, so folgt seinen Anschlag gegen eine Innenseite der U-förmigen Biegefeder 4.

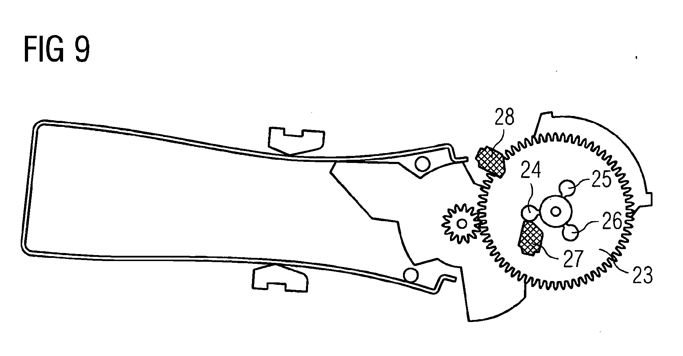

In Figur 9 befindet sich der schwenkbare Getriebeteil noch im selben Zustand. Ein Zahnrad 23 von ihm ist dargestellt, auf dem Lösenocken 24, 25, 26 angebracht sind. Sobald der Motor wieder aufstartet, berühren die Lösenocken 24, 25, 26 einen Lösekörper 27, 28 des zweiten Getriebeteils. Im Unterschied jedoch mit der Annährung vor dem Abschalten, als der Motor in die andere Richtung drehte, treffen die Lösenocken 24, 25, 26 nun nicht auf die abgeschrägten Seite des Lösekörpers 27, sondern trifft Lösenocken 24 frontal auf dessen quer stehende Berührungsfläche. In Folge dieses Pulses schwenkt der schwenkbare Getriebeteil bis zur Rampe 22, auf welchem eine Einwirkung durch die Biegefeder 4 auf den schwenkbaren Getriebeteil resultiert. Von daher folgt eine weitere Bewegung des schwenkbaren Getriebeteils bis zur Mittellage hin. In Anbetracht des kleinen Motors trägt dieser grosse Puls an der zuverlässigen Lösung des schwenkbaren Getriebeteils aus der abgeschalteten Lage hinaus bei, obwohl die kleinen Pulse bei seiner umgekehrten Drehrichtung die Annährung vor dem Abschalten nicht wesentlich erschweren. Vorteilhaft ist, zwecks Abdämpfung, das Material der Lösekörper 27, 28 an ihren schrägen Berührungsflächen weicher als ihr sonstiges Material. Gleiches gilt optional für das Material der Lösenocken 24, 25, 26 an ihren diese schrägen Berührungsflächen berührenden Seiten.

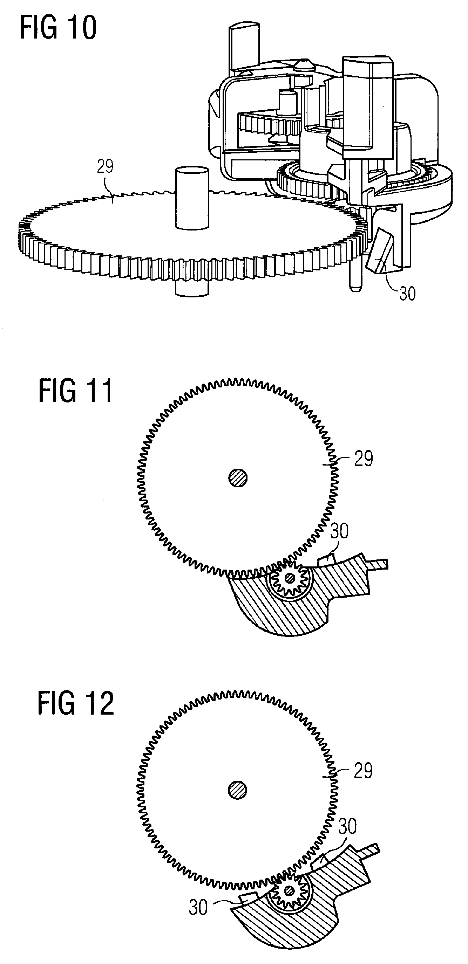

In Figuren 10 wird bei der Betätigung eines nicht dargestellten Handverstellers ein Zahnrad 29 des zweiten Getriebeteils nach unten bewogen. Dadurch wird der Motor über einen nicht dargestellten Schalter ausgeschaltet, falls er zu dieser Zeit läuft. Ebenso wird Zahnrad 29 aus seinem Gegenstück des schwenkbaren Getriebeteils ausgerückt.

Falls der schwenkbare Getriebeteil aus der Mittellage ist, wie dargestellt in Figur 11, so dienen Rampen 30 dazu, durch Kontakt mit dem Zahnrad 29 den schwenkbaren Getriebeteil wieder auf dem Weg in die Mittellage zu schwenken. Sobald dabei ein Abtastelement der Biegefeder auf eine Rampe der Kurvenscheibe einwirkt, setzt sich diese Bewegung federgestützt bis zur Mittellage hin fort. In Figur 12 ist der schwenkbare Getriebeteil in der Mittellage zurückgestellt.

Somit ist sichergestellt, dass Motor und Handversteller einander nicht stören.

## Patentansprüche

1. Stellantrieb, zumindest mit einem Motor (9), einem Getriebe und einem Stellanschluss (15),
wobei das Getriebe mit zumindest zwei gegenseitig bewegbaren Getriebeteilen (1, 14) ausgestattet ist, sowie einer auf zwei dieser Getriebeteile (1, 14) einwirkenden Feder (4) die deren Bewegung aus einem Ruhestand hinaus entgegenwirkt,
wobei das Getriebe so konstruiert ist, dass bei gesperrtem Stellanschluss der Motor (9) in Betrieb die Getriebeteile (1, 14) aus dem Ruhestand hinaus zu einem Schaltpunkt hin bewegt, **dadurch gekennzeichnet, dass**
das Getriebe so konstruiert ist, dass es bei der Bewegung aus dem Ruhestand hinaus die Entgegenwirkung der Bewegung ab einem gewissen Punkt vor dem Schaltpunkt reduziert.

2. Stellantrieb gemäß Anspruch 1, wobei
das Getriebe so konstruiert ist, dass es bei der Bewegung aus dem Ruhestand hinaus deren Entgegenwirkung an einem gewissen zweiten Punkt vor dem Schaltpunkt auf unter 60% ihres maximalen Wertes reduziert.

3. Stellantrieb gemäß einem der vorhergehenden Ansprüche, wobei
die Feder (4) eine Biegefeder ist.

4. Stellantrieb gemäß einem der vorhergehenden Ansprüche, wobei
das erste Getriebeteil (1) zumindest mit einer Kurvenscheibe (5) ausgestattet ist,
das zweite Getriebeteil (14) zumindest mit einem Abtastelement (7) für die Kurvenscheibe (5) ausgestattet ist, und
die Feder (4) bei der Bewegung aus dem Ruhestand hinaus entsprechend der Position auf der Kurvenscheibe (5) des Abtastelements (7) auf die Getriebeteile (1, 14) einwirkt.

5. Stellantrieb gemäß Anspruch 4, wobei
die Feder mittels Abtastelements (7) und Kurvenscheibe (5) auf die Getriebeteile (1, 14) einwirkt, und
die Kurvenscheibe (5) zumindest eine Rampe (6) enthält, auf welcher eine maximale Entgegenwirkung durch die Feder (4) resultiert.

6. Stellantrieb gemäß Anspruch 5, wobei
die Kurvenscheibe (5) zumindest eine der Rampe (6) naheliegende federneutrale Strecke enthält, auf welcher keine Entgegenwirkung durch die Feder (4) resultiert.

7. Stellantrieb gemäß einem der vorhergehenden Ansprüche, wobei
das Getriebe mit einem Vorspannungselement (8) ausgestattet ist, das geeignet ist um die Entgegenwirkung durch die Feder (4) einzustellen.

8. Stellantrieb gemäß Anspruch 7, wobei
das Vorspannungselement (8) geeignet ist, die Entgegenwirkung durch die Feder (4) bei unterschiedener Richtung der Bewegung aus dem Ruhestand hinaus unterschieden einzustellen.

9. Stellantrieb gemäß einem der vorhergehenden Ansprüche, wobei
das Getriebe so konstruiert ist, dass es bei der Bewegung aus dem Ruhestand hinaus am Schaltpunkt den Motor (9) abschaltet.

10. Stellantrieb gemäß einem der vorhergehenden Ansprüche, wobei
einer der beiden Getriebeteile (1) mit einem Zahnrad (23) ausgestattet ist, das mit zumindest einem Lösenocken (24, 25, 26) ausgestattet ist,
der andere Getriebeteil (14) mit zumindest einem Lösekörper (27, 28) ausgestattet ist, und
bei deren Bewegung aus dem Ruhestand hinaus in der Nähe eines Schaltpunkts Lösenocken (24, 25, 26) und Lösekörper (27, 28) einander berühren.

11. Stellantrieb gemäß Anspruch 10, wobei
Lösenocken (24, 25, 26) und Lösekörper (27, 28) so gestaltet sind, dass bei unterschiedlicher Drehrichtung des Zahnrads (23) ein Lösenocken (24, 25, 26) auf eine abgeschrägte, beziehungsweise auf eine quer stehende Berührungsfläche des Lösekörpers (27, 28) trifft.

12. Stellantrieb gemäß einem der vorhergehenden Ansprüche, wobei
das Getriebe mit zumindest einem Handversteller ausgestattet ist, und
das Getriebe so konstruiert ist, dass es bei einer Betätigung des Handverstellers den Motor (9) abschaltet, zwei auf einander einwirkenden Zahnräder der ersten und zweiten Getriebeteile (1, 14) ausrückt und die Getriebeteile (1, 14) gegebenenfalls in den Ruhestand hinein zwingt.

## Claims

1. Actuator, at least with a motor (9), a gear unit and an actuation connector (15),
wherein the gear unit is fitted with at least two mutually movable gear parts (1, 14), as well as a spring (4) acting on two of these gear parts (1, 14) which counteracts their movement out of an idle state,
wherein the gear unit is designed such that when the actuation connector is locked the motor (9) moves the gear parts (1, 14) out of the idle state during operation to an operating point, **characterised in that**
the gear unit is designed such that during the movement out of the idle state it reduces the extent to which the movement is counteracted as from a particular point upstream of the operating point.

2. Actuator according to claim 1, wherein
the gear unit is designed such that during the movement out of the idle state it reduces the extent to which the movement is counteracted at a particular second point upstream of the operating point to less than 60% of its maximum value.

3. Actuator according to one of the preceding claims, wherein
the spring (4) is a flexing spring.

4. Actuator according to one of the preceding claims, wherein
the first gear part (1) is at least fitted with a cam plate (5),
the second gear part (14) is at least fitted with a touch element (7) for the cam plate (5), and
the spring (4) acts on the gear parts (1, 14) during the movement out of the idle state in accordance with the position on the cam plate (5) of the touch element (7).

5. Actuator according to claim 4, wherein
the spring acts on the gear parts (1, 14) by means of a touch element (7) and cam plate (5), and
the cam plate (5) contains at least one ramp (6), on which a maximum counteraction by the spring (4) results.

6. Actuator according to claim 5, wherein
the cam plate (5) contains at least one spring-neutral path close to the ramp (6), on which no counteraction by the spring (4) results.

7. Actuator according to one of the preceding claims, wherein
the gear unit is fitted with a pretensioning element (8) which is suitable for adjusting the counteraction by the spring (4).

8. Actuator according to claim 7, wherein
the pretensioning element (8) is suitable for distinctly adjusting the counteraction by the spring (4) for different direction of movement out of the idle state.

9. Actuator according to one of the preceding claims, wherein
the gear unit is designed such that it switches the motor (9) off at the operating point during the movement out of the idle state.

10. Actuator according to one of the preceding claims, wherein
one of the two gear parts (1) is fitted with a gear wheel (23) that is fitted with at least one release cam (24, 25, 26),
the other gear part (14) is fitted with at least one release element (27, 28), and
when they move out of the idle state in the vicinity of an operating point, release cams (24, 25, 26) and release elements (27, 28) touch one another.

11. Actuator according to claim 10, wherein
release cams (24, 25, 26) and release elements (27, 28) are designed such that if the gear wheel (23) is rotating in a different direction a release cam (24, 25, 26) strikes a bevelled, respectively a perpendicular, contact area of the release element (27, 28).

12. Actuator according to one of the preceding claims, wherein
the gear unit is fitted with at least one manual actuator, and the gear unit is designed such that when the manual actuator is actuated it switches the motor (9) off, disengages two mutually interacting gear wheels of the first and second gear parts (1, 14) and, if applicable, forces the gear parts (1, 14) into the idle state.

## Revendications

1. Mécanisme de commande, comprenant au moins un moteur (9), un engrenage et une borne de commande (15),
l'engrenage étant doté d'au moins deux parties d'engrenage (1, 14) mobiles l'une par rapport à l'autre, ainsi que d'un ressort (4) agissant sur deux de ces parties (1, 14) et s'opposant à leur mouvement hors d'une position de repos,
l'engrenage étant construit de façon que le moteur (9) en fonctionnement déplace les parties d'engrenage (1, 14) hors de la position de repos vers un point de commutation lorsque la borne de commande est bloquée,
**caractérisé en ce que**
l'engrenage est construit de façon à réduire, lors du mouvement hors de la position de repos, l'opposition au mouvement à partir d'un certain point situé avant le point de commutation.

2. Mécanisme de commande selon la revendication 1, dans lequel
l'engrenage est construit de façon à réduire, lors du mouvement hors de la position de repos, l'opposition au mouvement au niveau d'un certain deuxième point situé avant le point de commutation à moins de 60 % de sa valeur maximale.

3. Mécanisme de commande selon l'une des revendications précédentes, dans lequel
le ressort (4) est un ressort de flexion.

4. Mécanisme de commande selon l'une des revendications précédentes, dans lequel
la première partie d'engrenage (1) est dotée au moins d'un disque à came (5),
la deuxième partie d'engrenage (14) est dotée au moins d'un élément palpeur (7) pour le disque à came (5), et
le ressort (4), lors du mouvement hors de la position de repos, agit sur les parties d'engrenage (1, 14) selon la position de l'élément palpeur (7) sur le disque à came (5).

5. Mécanisme de commande selon la revendication 4, dans lequel
le ressort agit sur les parties d'engrenage (1, 14) au moyen de l'élément palpeur (7) et du disque à came (5), et
le disque à came (5) comporte au moins une rampe (6) sur laquelle apparaît une opposition maximale exercée par le ressort (4).

6. Mécanisme de commande selon la revendication 5, dans lequel
le disque à came (5) comporte au moins un tronçon neutre par rapport au ressort, qui est proche de la rampe (6) et sur lequel n'apparaît pas d'opposition exercée par le ressort (4).

7. Mécanisme de commande selon l'une des revendications précédentes, dans lequel
l'engrenage est doté d'un élément de précontrainte (8) apte à régler l'opposition exercée par le ressort (4).

8. Mécanisme de commande selon la revendication 7, dans lequel
l'élément de précontrainte (8) est apte à régler différemment l'opposition exercée par le ressort (4) en cas de direction différente du mouvement hors de la position de repos.

9. Mécanisme de commande selon l'une des revendications précédentes, dans lequel
l'engrenage est construit de façon à arrêter le moteur (9) au point de commutation lors du mouvement hors de la position de repos.

10. Mécanisme de commande selon l'une des revendications précédentes, dans lequel
l'une des deux parties d'engrenage (1) est dotée d'une roue dentée (23) laquelle est dotée d'au moins une came de détachement (24, 25, 26),
l'autre partie d'engrenage (14) est dotée d'au moins un corps de détachement (27, 28), et
les cames de détachement (24, 25, 26) et corps de détachement (27, 28) sont en contact les uns avec les autres, à proximité d'un point de commutation, lors de leur mouvement hors de la position de repos.

11. Mécanisme de commande selon la revendication 10, dans lequel
les cames de détachement (24, 25, 26) et corps de détachement (27, 28) sont conçus de façon qu'une came de détachement (24, 25, 26) rencontre une surface de contact biseautée, respectivement transversale du corps de détachement (27, 28) en cas de sens de rotation différent de la roue dentée (23).

12. Mécanisme de commande selon l'une des revendications précédentes, dans lequel
l'engrenage est doté d'au moins une commande manuelle, et dans lequel
l'engrenage est construit de façon à arrêter le moteur (9) en cas d'actionnement de la commande manuelle, à désengager les deux roues dentées agissant l'une sur l'autre des première et deuxième parties d'engrenage (1, 14) et, le cas échéant, à forcer les parties d'engrenage (1, 14) dans la position de repos.
